(19) Europäisches Patentamt
European Patent Office
Office européen des brevets

(11) Publication number: **0 438 284 A1**

# (12) EUROPEAN PATENT APPLICATION

(21) Application number: **91300310.9**

(22) Date of filing: **16.01.91**

(51) Int. Cl.[5]: **C08K 5/20**, C09D 5/02, C09D 7/12

(30) Priority: **16.01.90 US 464910**

(43) Date of publication of application: **24.07.91 Bulletin 91/30**

(84) Designated Contracting States: **AT BE CH DE DK ES FR GB GR IT LI LU NL SE**

(71) Applicant: **SEQUA CHEMICALS INC.**
**One Sequa Drive**
**Chester South Carolina (US)**

(72) Inventor: **North, Bernard**
**624 Plainfield Road**
**Rock Hill, South Carolina (US)**
Inventor: **Whitley, David**
**175 Woodwind Drive**
**Rock Hill, South Carolina (US)**

(74) Representative: **Lawrence, Peter Robin Broughton et al**
**GILL JENNINGS & EVERY 53-64 Chancery Lane**
**London WC2A 1HN (GB)**

## (54) Polymer emulsion.

(57) The level of free formaldehyde in a polymer emulsion comprising an acrylamide cross-linking agent is reduced by the addition of a formaldehyde scavenger having the formula $CH_3COCH_2CONR_2R_3$ where $R_2$ and $R_3$ are H or lower alkyl. The emulsions are suitable for use in coating or binder compositions.

EP 0 438 284 A1

# POLYMER EMULSION

The use of methylolacrylamide as a crosslinker in polymer emulsions is well known in the industry. These emulsions have a variety of uses including as binders and coatings. A primary use of these emulsions is for imparting adequate resistance to water and solvents depending on the performance desired in the final products, such as with nonwoven fabrics and coated papers. A serious drawback to the use of emulsions containing methylolacrylamide is that they contain free-formaldehyde. This is present during the preparation and storage of the emulsion and its use as a coating or binder.

The presence of even less than 1% of free-formaldehyde based on the total weight of the product is undesirable not only because of its unpleasant odour, but because it is an allergen and irritant causing reactions in the operators who manufacture the emulsion and treat and handle the products coated or bound with such emulsions. It can even be an irritant to persons who handle and wear garments treated with the emulsions.

These problems associated with the presence of free-formaldehyde are well known and considerable efforts have been made to reduce free-formaldehyde in binders and coatings.

Various attempts have been made to reduce the free-formaldehyde content in different types of products by adding substances to bind the formaldehyde. These include adding substances such as ammonia, hydrazine derivatives, urea, thiourea, ethylene urea, acrylamide polymers and others. European Patent No. 302289 discloses acid curing lacquers based on nonaqueous alkyl resin-urea resin combinations having reduced formaldehyde emissions through use of a compound having an acidic alpha-methylene group such as acetoacetamide.

This invention relates to an aqueous polymer emulsion having reduced free formaldehyde comprising a crosslinking agent having the formula :

$$CH_2 = \overset{\displaystyle R_1}{\overset{|}{C}} - CONHCH_2OR_2$$

wherein $R_1$ is H or $CH_3$ and $R_2$ is H or an alkyl group having up to 5 carbon atoms ; characterised in that it further comprises a formaldehyde scavenger having the formula $CH_3COCH_2CONR_2R_3$ wherein $R_2$ and $R_3$ are H or lower alkyl having up to 5 carbon atoms. The preferred crosslinker is N-methylolacrylamide and the preferred formaldehyde scavenger is acetoacetamide.

An aqueous polymer emulsion is utilized which contains a formaldehyde emitting crosslinking agent. The crosslinking agent has the following formula :

$$CH_2 = \overset{\displaystyle R_1}{\overset{|}{C}} - CONHCH_2OR_2$$

wherein $R_1$ is H or $CH_3$ and $R_2$ is H or an alkyl group having up to 5 carbon atoms. Examples of such crosslinking agents include N-methylolacrylamide, N-methylolmethacrylamide, N-methoxymethylacrylamide, N-methoxymethylmethacrylamide N-ethoxymethylacrylamide, N-ethoxymethylmethacrylamide, N-butoxymethylacrylamide, N-butoxymethylmethacrylamide. N-methylolacrylamide is preferred because of its wide use in industry with polymer emulsions due to its effectiveness and cost. Generally, the crosslinking agent is utilized at a level of 0.25 to 10% by weight of the polymer solids, preferably 1 to 4%.

The polymer can contain any polymer suitable for the desired end product and generally includes various vinyl and acrylic polymers, as well as copolymers thereof. Preferred polymers for various coating and binder products include polystyrene, polyvinylacetate, polyacrylates, polymethacrylates, styrene-butadiene copolymer and ethylene-vinyl acetate copolymers, as well as copolymers of the monomers thereof and interpenetrating polymer networks combining such polymers (see U.S. Patent No. 4,616,057). Generally, the polymer emulsion is manufactured at solids levels of up to 60%, preferably 40 to 55%.

To reduce the free formaldehyde in the aqueous polymer emulsions, a formaldehyde scavenger is selected having the formula $CH_3COCH_2CONR_2R_3$, wherein $R_2$ and $R_3$ are hydrogen or a lower alkyl having up to 5 carbon atoms. The preferred scavenger is acetoacetamide, although other derivatives such as dimethylacetoacetamide, monomethylacetoacetamide, diethylacetoacetamide and monoethylacetoacetamide can also be used. This scavenger is found to be effective in aqueous polymer emulsions over a wide range of use, with even low levels of this scavenger being shown to reduce the level of free formaldehyde. Generally,

the by weight ratio of the crosslinking agent to the formaldehyde scavenger is within the range of 1 :5 and 1 :0.01 ; preferably 1 :1 and 1 :0.1. The formaldehyde scavenger, in particular acetoacetamide, is believed to bind the formaldehyde strongly both through the amide function and other more complex reactions with other parts of the molecule. Advantageously, by binding the formaldehyde strongly this scavenger enables polymer emulsions to be prepared which can withstand high temperatures (e.g. over 130°C), high pressures and acidic conditions without breaking the formaldehyde bond, thereby holding onto the formaldehyde more effectively than other formaldehyde scavengers such as urea or substituted ureas.

Because of the high affinity of acetoacetamide for free formaldehyde, the aqueous polymer emulsions can be effectively used where high temperatures are encountered, such as in binders for roofing mats, and coatings such as coatings for filter media, as well as coatings for moldable carpeting. In addition, these polymer emulsions can be used under acidic conditions (i.e. below pH 7) where other formaldehyde scavengers such as urea are less effective. Acidic conditions are encountered in polymer emulsions when latent catalysts are added to generate solvent and water resistance to the resultant product. Suitable latent catalysts include : ammonium salts such as ammonium chloride, ammonium sulfate and ammonium phosphate ; acids such as phosphoric acid, citric acid and toluene sulfonic acid ; magnesium salts such as magnesium chloride and magnesium nitrate ; aluminum salts such as aluminum chloride and aluminum sulfate ; and zinc salts such as zinc nitrate, zinc sulfate and zinc fluorocarbonate.

Example I

The emission of formaldehyde at high temperature was studied for polyvinyl acetate emulsion containing 4% (solids basis) of N-methylolacrylamide. The control contained no acetoacetamide, while acetoacetamide was added to Example 1 at a level of 1.3% (solids basis).

The latex samples at 45% solids were diluted to 20% solids and impregnated on swatches of polyester mat to effect approximately 20% dry add-on. All weights were recorded for calculation. Each of the impregnated mats was then placed in a heated vacuum oven (internal volume 12.6 liters) and the emitted formaldehyde was withdrawn, by means of a vacuum pump, for 20 minutes at 7 liters/minute, from the oven and through four gas scrubbing bottles, the first three of which contained 50 ml each of an aqueous solution of 0.1 M potassium acetate and 2.0% hydrazine sulfate. The contents of the first three bottles were combined and mixed well. Finally, the amount of formaldehyde was determined by square wave voltametry on a polarograph, expressing the result as ug formaldehyde/g dry resin.

The results are given in the following table :

| | Cure Temperature | | |
|---|---|---|---|
| Sample | 135°C | 160°C | 190°C |
| CONTROL | 848 | 1430 | 1913 |
| EXAMPLE I | 426 | 788 | 1190 |

This example demonstrates that the acetoacetamide effectively reduced the free-formaldehyde even at high temperatures.

Example II

A vinyl acetate, styrene, N-methylolacrylamide, acrylamide latex interpenetrating polymer network (68.2/25.9/3.4/2.4% by weight of monomers respectively) was mixed with various ratios of a commercial 30% aqueous solution of acetoacetamide. Approximately 1.0g of the polymer-acetoacetamide composition were coated onto an automotive carpeting substrate (needle punched polyester) and placed into a 1 liter flask. A clean air flow of approximately 500 cc/min. was passed through flask as contents were heated to 120°C. The effluent gases were passed through an impinger and tested for formaldehyde released from the substrate by square wave voltametry. The results are shown in the table below.

| Composition | | |
|---|---|---|
| Parts Polymer Emulsion (45% solids) | Parts 30% Acetoacetamide | Formaldehyde Released (dry basis) |
| 100.0 | 0.0 | 317 ug/g |
| 99.75 | 0.25 | 200 |
| 99.75 | 0.5 | 140 |
| 99.0 | 1.0 | 103 |
| 98.0 | 2.0 | 33 |
| 95.0 | 5.0 | 35 |

As can be seen, the addition of even small percentages of acetoacetamide provided a significant reduction in formaldehyde released from the substrate on curing.

## Claims

1. An aqueous polymer emulsion having reduced free formaldehyde comprising a crosslinking agent having the formula :

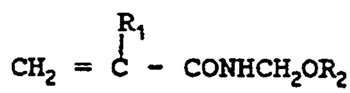

wherein $R_1$ is H or $CH_3$ and $R_2$ is H or an alkyl group having up to 5 carbon atoms ; characterised in that it further comprises a formaldehyde scavenger having the formula :

$$CH_3COCH_2CONR_2R_3$$

wherein $R_2$ and $R_3$ are H or lower alkyl having up to 5 carbon atoms.

2. A polymer emulsion according to claim 1 wherein the crosslinking agent is N-methylolacrylamide and the formaldehyde scavenger is acetoacetamide.

3. A polymer emulsion according to claim 1 or 2 wherein the weight ratio of crosslinking agent to formaldehyde scavenger is within the range of 1 :5 to 1 :0.01 preferably from 1 :1 to 1 :0.1.

4. A polymer emulsion according to claim 2 wherein the weight ratio of N-methylolacrylamide to acetoacetamide is within the range of 1 :1 to 1 :0.1

5. A polymer emulsion according to any preceding claim wherein polymer emulsion has a solids level up to 60% and the amount of the crosslinking agent is within the range of 0.25 to 10% by weight of polymer solids.

6. A polymer emulsion according to any preceding claim wherein the pH is below 7.

7. A polymer according to claim 6 further comprising a latent catalyst.

8. A polymer emulsion according to claim 7 wherein the latent catalyst is selected from the group consisting of magnesium salts, aluminum salts, zinc salts, ammonium salts, phosphoric acid, citric acid and toluene sulfonic acid.

9. A polymer emulsion according to any preceding claim wherein the polymer is selected from the group consisting of a vinyl polymer and an acrylic polymer and copolymer of the monomers thereof.

**10.** A polymer emulsion according to claim 9 wherein the polymer is selected from the group consisting of polyvinyl acetate, polystyrene, styrene-butadiene copolymer, polyacrylate, polymethacrylate, ethylene-vinylacetate copolymer and copolymers of the monomers thereof.

**11.** A coating or binder composition comprising the polymer emulsion according to any preceding claim.

**12.** A coating composition according to claim 11 wherein the coating is a moldable carpeting coating.

**13.** A binder composition according to claim 11 wherein the binder is a roofing mat binder.

**14.** Use of a polymer emulsion according to any of claims 1 to 10 as a coating or binder composition wherein the composition is subjected to high temperature and/or pressure during application or curing.

European Patent Office

# EUROPEAN SEARCH REPORT

Application Number

EP 91 30 0310

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-302289 (VIANOVA KUNSTHARZ AKTIENGESELLSCHAFT)<br>* claims *<br>--- | 1 | C08K5/20<br>C09D5/02<br>C09D7/12 |
| A | EP-A-143175 (HOECHST AKTIENGESELLSCHAFT)<br>* claims *<br>--- | 1 | |
| D,A | EP-A-209325 (SUN CHEMICAL CORPORATION)<br>----- | | |
| | | | **TECHNICAL FIELDS SEARCHED (Int. Cl.5 )** |
| | | | C08K<br>C08L<br>C09D |

The present search report has been drawn up for all claims

| Place of search | Date of completion of the search | Examiner |
|---|---|---|
| THE HAGUE | 23 APRIL 1991 | DE LOS ARCOS Y E. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)